# EUROPÄISCHE PATENTSCHRIFT

(11) **EP 0 396 687 B1**
(45) Veröffentlichungstag und Bekanntmachung des Hinweises auf die Patenterteilung: **28.06.1995**
(21) Anmeldenummer: 89911773.3
(22) Anmeldetag: 26.10.1989
(51) Int. Cl.: H04N 1/46, H04N 3/15

(54) **OPTOELEKTRONISCHER FARBBILDWANDLER**
OPTO-ELECTRONIC COLOUR-IMAGE SENSOR
CAPTEUR OPTO-ELECTRONIQUE D'IMAGES COULEUR

(30) Priorität: 31.10.1988 DE 3837063
(43) Veröffentlichungstag der Anmeldung: 14.11.1990
(73) Patentinhaber: LENZ, Reimar, 80801 München (DE)
(72) Erfinder: LENZ, Reimar, 80801 München (DE)
(74) Vertreter: Klunker . Schmitt-Nilson . Hirsch
(86) Internationale Anmeldenummer: DE8900690
(87) Internationale Veröffentlichungsnummer: WO9005424

(56) Entgegenhaltungen:
- EP-A- 0 063 061
- EP-A- 0 131 387
- WO-A-86/05641
- Patent Abstracts of Japan, vol. 7, No: 144 (E-183) (1289) 23 June 1983 & JP-A-58 56581

## Beschreibung

### Technisches Gebiet

Die Erfindung bezieht sich auf einen optoelektronischen Farbbildwandler mit einem Abbildungssystem, das ein Objekt auf einen zweidimensionalen CCD-Flächensensor abbildet, dessen Matrix aus lichtempfindlichen Sensor-Elementen zur Aufnahme eines Farbbildes eine Farbfiltermaske mit mindestens drei Farbauszügen aufweist.

### Stand der Technik

Derartige optoelektronische Farbbildwandler mit einem einzigen Wandlerarray bzw. einem CCD-Flächensensor sind allgemein bekannt und werden beispielsweise in Amateur-Videokameras eingesetzt. Nur beispielhaft wird auf die EP-A-0 063 061 verwiesen, in der ein CCD-Flächensensor beschrieben ist. Die gattungsgemäßen Farbbildwandler haben gegenüber Farbbildwandlern, die mit jeweils einem Wandlerbaustein für die einzelnen Farbauszüge, beispielsweise Rot, Grün und Blau arbeiten, den Vorteil eines geringeren baulichen Aufwands. Nachteilig ist jedoch, daß die Zahl der für einen Farbauszug zur Verfügung stehenden lichtempfindlichen Sensor-Elemente -je nach Ausbildung der Farbfiltermaske - im Mittel um den Faktor 3 geringer als bei optoelektronischen Farbbildwandlern ist, die mit drei Wandlerbausteinen, also je einem für jede Grundfarbe arbeiten.

Es sind aus der WO-A-8605641 und der WO-A-8605642 optoelektronische Farbbildwandler anderer Gattung als im Oberbegriff des Patentanspruchs 1 vorausgesetzt, nämlich Farbbildwandler mit drei Wandlerbausteinen bekannt, bei denen das Bild relativ zu den CCD-Arrays um einen Bruchteil des Abstandes der CCD-Elemente (im folgenden auch als Pixel bezeichnet) verschoben wird. Diese Verschiebung - auch als Sub-Pixel-Verschiebung bezeichnet - erfolgt, um die Auflösung der CCD-Arrays über die durch die Pixel-Zahl vorgegebene Auflösung zu erhöhen. Eine Speicher- und Steuereinheit setzt die einzelnen Teilbilder mit niedrigerer Auflösung zu einem Standbild höherer Auflösung zusammen.

Aus der EP-A-0 131 387 ist ein Wandler bekannt, dessen Farbfiltermaske aus einer zweidimensional variierenden Anordnung von Farbfiltern, nämlich Cyan-Farbfiltern, "farblosen Filtern" und Gelb-Farbfiltern besteht. Aufgrund der Verwendung von "farblosen Filtern" werden bei diesem Wandler keine drei Farbauszüge aufgenommen, so daß der aus diesem Dokument bekannte Wandler einer anderen Gattung als im Oberbegriff des Patentanspruchs 1 vorausgesetzt angehört. Bei diesem Wandler soll das Farb-Aliasing dadurch reduziert werden, daß der Wandler relativ zu dem Bild verschoben wird.

Aus Patent Abstracts of Japan, Vol. 7, No. 144, S.1289 ist ein Wandler bekannt, bei dem ein CCD-Array in einer Ebene zweidimensional verschoben wird. Das Problem des Farb-Aliasing ist in dieser Druckschrift nicht angesprochen.

### Darstellung der Erfindung

Die Erfindung geht von dem Grundgedanken aus, zur Erhöhung der Auflösung eines optoelektronischen Farbbildwandlers gemäß dem Oberbegriff des Patentanspruchs 1, d.h. eines Farbbildwandlers mit nur einem Wandlerelement, eine Relativ-Verschiebung zwischen dem Bild und dem CCD-Array vorzusehen.

Erfindungsgemäß ist nun erkannt worden, daß eine einfache Übertragung der aus der WO-A-8605641 oder der WO-A-8605642 bekannten "Sub-Pixel-Relativ-Verschiebung" nicht ausreichend ist.

Der Erfindung liegt deshalb die Aufgabe zugrunde, einen optoelektronischen Farbbildwandler mit einem Wandlerelement und einer vorgeschalteten Farbfiltermaske gemäß dem Oberbegriff des Patentanspruchs 1 derart weiterzubilden, daß sich eine über die der jeweiligen Farbe zugeordnete Zahl der CCD-Pixel erhöhte Auflösung ergibt, ohne daß Farb-Artefakte auftreten.

Eine erfindungegemäße Lösung dieser Aufgabe ist mit ihren Weiterbildungen und Ausgestaltungen in den Patentansprüchen gekennzeichnet.

Erfindungsgemäß ist erkannt worden, daß es zur Steigerung der Auflösung eines optoelektronischen Farbbildwandlers mit nur einem Bildaufnehmerelement, vor dem eine Farbfiltermaske zur Aufnahme von mindestens drei Farbauszügen, also beispielsweise eines roten, eines grünen und eines blauen Farbauszuges angeordnet ist, erforderlich ist, durch eine Relativ-Verschiebung zwischen dem Bild und dem Bildaufnehmer zunächst zu erreichen, daß nacheinander die für rot, grün und blau empfindlichen Sensor-Elemente des Bildaufnehmers, also beispielsweise des CCD-Flächensensors an die gleichen Bildorte zu liegen kommen.

Dementsprechend sind Mittel vorgesehen, um beispielsweise den CCD-Flächensensor oder ein Element im Strahlengang vor dem CCD-Flächensensor zu verschieben.

Eine Speicher- und Steuereinheit, die die einzelnen Teilbilder zwischenspeichert, setzt anschließend die mit relativ verschobenen CCD-Flächensensor aufgenommenen Farbauszugs-Bilder deckungsgleich zusammen.

Durch diese erfindungsgemäß vorgenommenen Maßnahmen wird erreicht, daß zunächst durch die Relativ-Verschiebung die "prinzipielle Unschärfe" eines optoelektronischen Farbbildwandlers gemäß dem Oberbegriff des Patentanspruchs 1 beseitigt wird, die dadurch entsteht, daß die einzelnen Farbauszugs-Bilder an "unterschiedlichen Bildorten" aufgenommen werden. Die Beseitigung dieser "prinzipiellen Unschärfe" ist eine Voraussetzung für die im Anspruch 6 angegebenen Sub-Pixel-Verschiebung, d. h. eine Relativ-Verschiebung zwischen Bild und Bildaufnehmer um einen Bruchteil des Abstandes der einzelnen lichtempfindlichen Flächenelemente. Diese Sub-Pixel-Verschiebung ermöglicht eine Erhöhung der Auflösung immer dann, wenn die Kantenabmessungen der lichtempfindlichen Fläche eines Sensor-Elementes lediglich einen Bruchteil des Abstandes zwischen den einzelnen Elementen trägt.

Weiterbildungen der Erfindung sind in den Unteransprüchen angegeben:

Die im Anspruch 2 angegebenen Verschiebung des CCD-Flächensensors hat gegenüber der Verschiebung oder Verkippung eines Elements im Strahlengang vor dem CCD-Flächensensor den Vorteil der leichteren technischen Realisierbarkeit.

Beispielsweise können Piezoelemente vorgesehen werden, die den CCD-Flächensensor in der Bildebene ein- oder zweidimensional (Ansprüche 3 und 4) verschieben.

Die bereits erwähnte und im Anspruch 5 angegebene "Sub-Pixel-Verschiebung" kann gemäß Anspruch 6 auch dazu benutzt werden, um bei unterschiedlichen Abständen der Sensor-Elemente in zueinander senkrechten Richtungen eine Angleichung der Bildauflösung zu erreichen.

Ferner ist es von Vorteil, daß die erfindungsgemäße Ausgestaltung auch eine Abtastung in einem hexagonalen Muster, das der dichtesten Flächenerfüllung entspricht, gestattet.

### Kurze Beschreibung der Zeichnungen

Die Erfindung wird nachstehend anhand von Ausführungsbeispielen unter Bezugnahme auf die Zeichnungen näber beschrieben, welche zeigen:

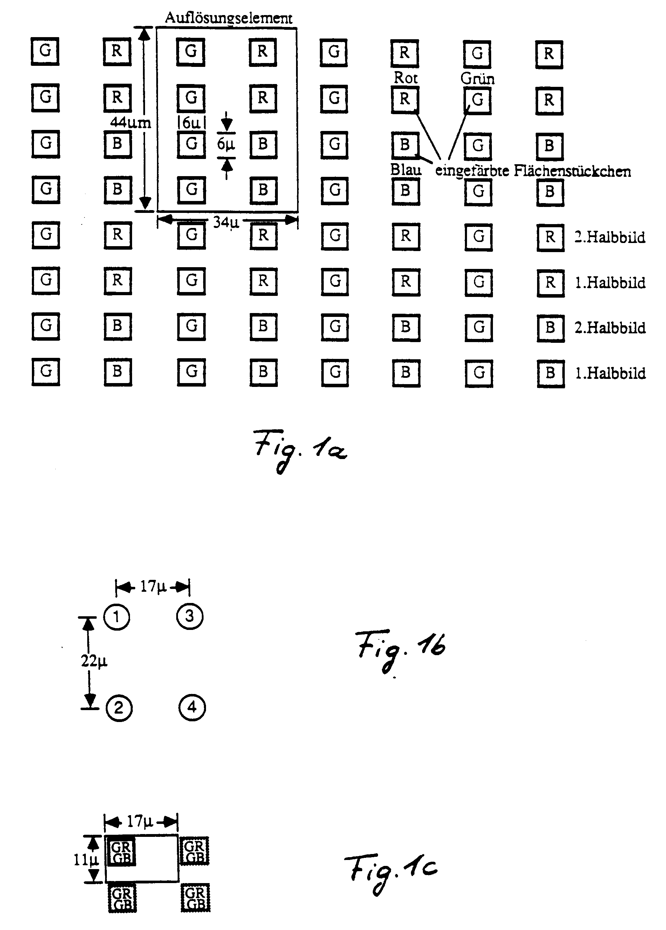

- Fig. 1: a die Sensorelemente und ihre Einfärbung (R, G, B) eines gattungsgemäßen Farbbildwandlers nach dem Stand der Technik,
- Fig. 1 b: die vier bei diesem Ausführungsbeispiel zur Vermeidung von Farbartefakten einzunehmenden um ganzzahlige Vielfache des SEL-Abstandes versetzten Sensorpositionen,
- Fig. 1c: das durch Überlagerung der dabei gewonnenen Teil bilder resultierende Auflösungselement, mit über einstimmenden Abtastorten für den roten, grünen und blauen Farbauszug.
- Fig. 2 a bis 2d: das Positionierschema für die Erzeugung von Farbauszügen mit annähernd gleicher Auflösung in x- und y-Richtung und nur partieller Vermeidung von Farbartefakten,
- Fig. 3 a bis 3d: das Positionierschema für die Erzeugung deckungsgleicher Farbauszüge mit nahezu hexagonalem Abtastraster,
- Fig. 4: ein Ausführungsbeispiel für einen verschiebbaren CCD-Sensor, und
- Fig. 5: ein Blockschaltbild des Gesamtsystems.

### Beschreibung von Ausführungsbeispielen

Bei dem im folgenden erläuterten Ausführungsbeispiel wird ohne Beschränkung des allgemeinen Erfindungsgedankens ein sogenannter Interline-Transfer-CCD-Flächensensor verwendet. Selbstverständlich ist die Erfindung jedoch auch bei Flächensensoren anwendbar, die nach dem Frame-Transfer-Prinzip oder nach anderen Prinzipien arbeiten, solange diese nur eine entsprechende Bilddarstellung ermöglichen.

Diese beiden genannten Sensortypen unterscheiden sich im Hinblick auf die erfindungsgemäße Anwendung im wesentlichen nur dadurch, daß bei Frame-Transfer-Sensoren praktisch die gesamte Fläche innerhalb einer Sensorzelle lichtempfindlich ist, während bei Interline-Transfer-Sensoren nur ein kleines Flächenelement lichtempfindlich ausgebildet ist. Typischerweise beträgt der lichtempfindliche Flächenanteil bei Interline-Transfer-Sensoren weniger als 25%, was eine erhebliche Steigerung der Bildauflösung durch Sub-SEL-Verschiebung zuläßt.

Bei dem gezeigten Ausführungsbeispiel wird ein Interline-Transfer-Flächensensor mit Fernsehbildrate verwendet, bei dem die für Farbbilder erforderliche spektrale Auflösung zu Lasten der Ortsauflösung erzielt wird, indem jedem Farbauszug nur ein Bruchteil der gesamten zur Verfügung stehenden Sensorelemente zugeordnet wird.

Fig. 1a zeigt schematisch einen Ausschnitt aus einem Interline-Transfer-CCD-Flächensensor, bei dem die lichtempfindlichen Flächen der einzelnen Sensorelemente als Vierecke eingezeichnet sind. Durch eine auf das CCD-Array aufgebrachte Farbfiltermaske sind die einzelnen Sensorelemente für Rot, Grün oder Blau empfindlich. Dies ist durch die Bezugszeichen R, G und B symbolisiert.

In Fig. 1a sind sowohl die Kantenabmessungen der lichtempfindlichen Flächenelemente als auch die des Auflösungselements angegeben, das der kleinsten periodisch wiederholten Struktur der Farbfiltermaske entspricht.

Erfindungsgemäß wird durch eine kleine zweidimensionale Relativverschiebung zwischen Sensor und Bild, die ohne Beschränkung des allgemeinen Erfindungsgedankens beispielsweise durch eine Verschiebung des Sensors erzielt wird, eine hohe örtliche Auflösung durch Verringerung der zeitlichen Auflösung erzielt, da mehrere Teilbilder nacheinander aufgenommen werden.

Durch unterschiedliche Verschiebungsmuster mit verschieden großer Anzahl von Teilbildern kann in gewissen Grenzen die zeitliche und die örtliche Auflösung frei gegeneinander ausgetauscht werden. Die maximale zeitliche Auflösung entspricht der Auslesedauer für ein Teilbild und ist damit beispielsweise durch die Fernsehbildrate gegeben, die maximale örtliche Auflösung durch die Abbildungsgüte des verwendeten Objektivs und durch die Abmessungen der lichtempfindlichen Flächenelemente innerhalb einer Sensorzelle. Bei den in Fig. la exemplarisch angegebenen Abmessungen von 6 x 6 »m liegt die erste Nullstelle der Modulations-Übertragungsfunktion bei 167 Linienpaaren pro Millimeter.

Fig. 1b zeigt das Positionierschema des Sensors relativ zum Bild für die Erzeugung deckungsgleicher Farbauszüge mit jeweils der Auflösung des entsprechenden Sensors in Schwarz/Weiß-Ausführung. Die einzelnen Positionen sind dabei von 1 bis 4 durchnumeriert und entsprechen einer Relativ-Verschiebung um einen SEL-Abstand in horizontaler und zwei SEL-Abständen in vertikaler Richtung.

Fig. 1c zeigt das Auflösungselement des resultierenden Bildes, das sich aus der Überlagerung der viel Teilbilder ergibt. Der für die Luminanzinformation wichtigste Farbauszug grün ist an jedem Abtastort doppelt vertreten, eine Folge der hier nur beispielhaft gezeigten Ausgestaltung der Farbmaske, die mehr grünempfindliche als rot- oder blauempfindliche Sensorelemente vorsieht.

Wie einem Vergleich der Figuren la und lc zu entnehmen ist, hat das Auflösungselement aufgrund der Relativverschiebung um ganzzahlige Vielfache des SEL-Abstands in Horizontalrichtung nur noch halb so große und in Vertikalrichtung sogar nur noch ein Viertel so große Abmessungen wie bei der Bildaufnahme, bei der das Bild und der Sensor zueinander ortsfest sind. Zugleich werden die Farbauszüge an denselben Abtastorten gewonnen und damit eventuelle Farbartefakte vermieden.

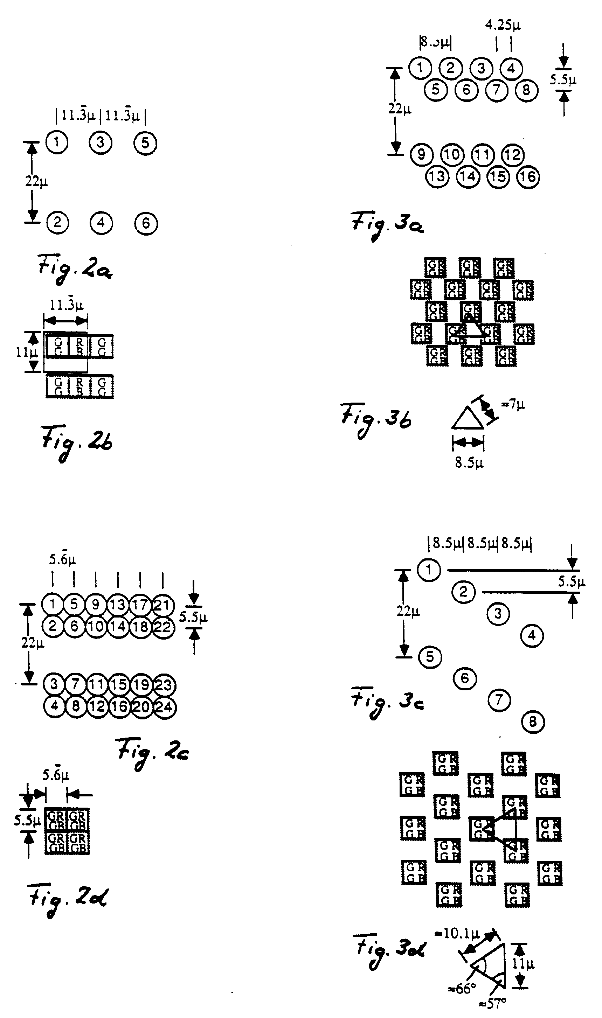

Fig. 2a zeigt ein Positionierschema für die Relativverschiebung, mit dem Farbauszüge erhalten werden, die in horizontaler und in vertikaler Richtung nahezu die gleiche Auflösung haben. Die Verschiebung in vertikaler Richtung beträgt wiederum das Doppelte des SEL-Abstandes, in horizontaler Richtung jedoch Vielfache von 2/3 des SEL-Abstandes.

Fig. 2b zeigt die Abmessungen des zugehörigen Auflösungselements. Dabei sind die roten und blauen Farbauszüge gegenüber dem grünen Farbauszug horizontal versetzt und daher die Farbartefakte nur zum Teil, nämlich in vertikaler Richtung, unterdrückt.

Fig. 2c zeigt ein Positionierschema, mit dem hochauflösende und deckungsgleiche Farbauszüge erhalten werden, die sowohl in horizontaler als auch in vertikaler Richtung nahezu gleiche Auflösung haben.

Fig. 2d zeigt die Abmessungen des zugehörigen Auflösungselements. Dabei sind die roten und blauen Farbauszüge deckungsgleich mit dem grünen Farbauszug.

Fig. 3a zeigt ein Positionierschema mit dem deckungsgleiche Farbauszüge mit nahezu hexagonalem Abtastraster erhalten werden.

Fig. 3b zeigt die Abmessungen des zugehörigen Auflösungselements. Die periodische Fortsetzung des Auflösungselements erfolgt hier entlang von drei Achsen, die im Winkel von ≈60° zueinander stehen. Die vertikale Achse ist eine der Hauptachsen.

Fig. 3c zeigt ein Positionierschema, mit dem hochauflösende und deckungsgleiche Farbauszüge mit nahezu hexagonalem Abtastraster erhalten werden.

Fig. 3d zeigt die Abmessungen des zugehörigen Auflösungselements. Die horizontale Achse ist nun eine der Hauptachsen.

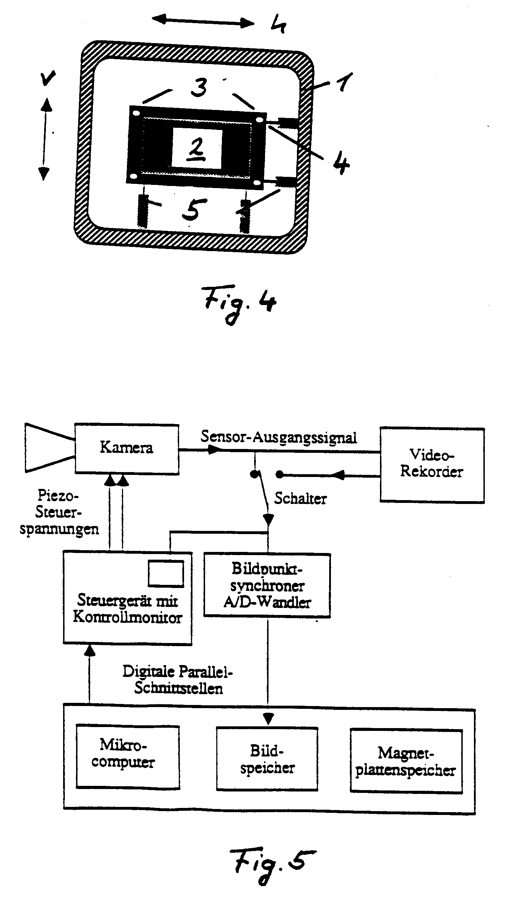

Fig. 4 zeigt ein Ausführungsbeispiel für einen gegenüber dem Bild verschiebbaren Sensor: Innerhalb eines Gehäuses 1 ist ein Sensor 2 auf einem Grundelement 3 befestigt, das mittels Blattfedern 4 und Piezostellgliedern 5 in Richtungen der Pfeile v und h verschiebbar ist.

Fig. 5 zeigt ein Blockschaltbild der Steuereinheit; unter Bezugnahme auf die in dieser Figur angegebenen Schaltelemente soll im folgenden die Funktionsweise des erfindungsgemäßen Farbbildwandlers näher erläutert werden:

Die Bildvorlage wird mit einem Objektiv auf den CCD-Sensor scharf abgebildet. Die Beschreibung bezieht sich auf den Fall, daß ein Farbbild mit der Auflösung von beispielsweise 1500 x 1100 Bildelementen je Farbauszug gewonnen werden soll. Der mit einer Farbmaske gemäß Fig. 1a ausgestattete CCD-Array habe 500 Sensorelemente in horizontaler und 550 SEL in vertikaler Richtung. Das erforderliche Positionierschema entspricht der Fig. 2c mit 24 einzunehmenden Positionen.

In der Position "1" werden zunächst während einer gewissen Integrationsdauer die einfallenden Photonen in den Sensorelementen in Photo-Elektronen umgewandelt und in den Sammelkondensatoren unter den lichtempfindlichen Flächen zu Ladungspaketen aufintegriert. Während der vertikalen Bildaustastlücken werden die Ladungen der Teilbilder in die neben den lichtempfindlichen Flächenstückchen befindlichen Transportkondensatoren der vertikalen CCD-Eimerketten umgeladen und stehen zum Auslesen bereit. Um der Verschiebemechanik möglichst lange Zeit zur Stabilisierung zu geben, gibt der Rechner bereits nun das Kommando zum Übergang in die nächste Position "2", bei der die lichtempfindlichen Flächenelemente in neue Bildabtastorte zu liegen kommen. Teilbilder, die während der Bewegung entstehen und damit bewegungsverwischt wären, werden nicht ausgewertet. Zum Ende der vertikalen Austastlücke beginnt das Auslesen der Ladungen. Das analoge Ausgangssignal des Sensors wird synchron zu dessen CCD-Auslesetakt digitalisiert (schnelle A/D-Wandlung in z.B. 8 Bit = 1 Byte pro Sensorelement) und in einem schnellen Speicher abgelegt. Nach Beendigung der Übertragung des Teilbildes von Position "1" in einen Massenspeicher beginnt das Auslesen des Teilbildes aus Position "2". In der davorliegenden vertikalen Austastlücke wurde bereits vom Rechner das Kommando zum Übergang in die Position "3" gegeben. Dieser Vorgang wiederholt sich so lange, bis alle 24 Teilbilder abgespeichert sind. Bei ausreichend schneller Abspeicherung d.h. Verwertung jedes zweiten Teilbildes und europäischer Fernsehnorm (25Hz=1/40ms) dauert der gesamte Vorgang 24 x 2 x 40 ms ≈ 2 sek. Während dieser Zeit darf sich das abzubildende Objekt nicht bewegen. Danach wird aus den einzelnen Teilbildern mit Hilfe des Rechners das hochaufgelöste Bild zusammengesetzt.

Bei analoger Zwischenspeicherung auf Videoband wird der Sensor in gleicher Weise bewegt. Beim späteren Einlesen in den Rechner ist beim Digitalisieren der Teilbilder aufgrund von Gleichlaufschwankungen des Laufwerks möglicherweise eine Time-Base Korrektur erforderlich und Fehler durch Drop-Outs müssen erkannt und korrigiert werden.

Durch die erfindungsgemäß vorgesehene kleine Relativverschiebung eines CCD-Flächensensors und nachfolgendem Zusammensetzen der Teilbilder werden folgende Vorteile erzielt.
1) Es wird eine sehr hohe Auflösung des Gesamtbildes von beispielsweise 2000 x 1650 Bildelemente für alle drei Farbkanäle bei Verwendung des Interline-Transfer-Farbsensors erreicht, der bei dem besprochenen Ausführungsbeispiel exemplarisch 250 x 550 SEL für den Grünkanal und 250 x 275 SEL für den Rot- und Blaukanal und lichtempfindlichen Flächenelementen der Größe 6 x 6 »m aufweist.
   Die Modulationsübertragungsfunktion des Sensors ist bei dieser Auflösung auf etwa 30% gefallen. Die ermöglicht insbesondere die ausreichend hochauflösende Abtastung einer DIN A4 Schriftseite, eines Farbdias oder eines Filmstreifens mit 24 x 18 mm Bildformat.
2) Die geometrische Präzision ist bereits bei normaler mechanischer Ausbildungen der verschobenen Elemente sehr hoch, da die Verschiebewege sehr kurz sind: Bei dem genannten Beispiel ist die Größe der Auflösungszelle beim Farbsensor 34 x 44 »m, während sie beim entsprechenden S/W-Sensor 17 x 11 »m beträgt. Bei einem relativen Fehler der mechanischen Verschiebung von beispielsweise 1% ergibt sich im gesamten Bildfeld ein maximaler Fehler von 0,44 »m (mechanisch) plus 0,1 »m des Sensors. Dies ist klein gegenüber der radialen Linsenverzeichnung von CCTV-Objekten. Diese beträgt beispielsweise bei einem Objektiv mit einer Brennweite von 25 mm am Bildrand bereits bis zu 50 »m.
3) Die Lichtempfindlichkeit wird gegenüber Zeilenscannern oder Trommelscannern um Größenordnungen gesteigert, so daß die Aufnahmezeit bei gleicher Auflösung und gleichem Signal/ Rausch-Abstand wesentlich verkürzt wird.
4) Durch verschiedene Verschiebungsmuster hat man die Möglichkeit, in gewissen Grenzen frei zwischen hoher Ortsauflösung und hoher zeitlicher Auflösung zu wählen.
5) Ferner bietet. sich die Möglichkeit, das Bild nicht nur im rechteckigen, sondern auch in nahezu hexagonalem Raster abzutasten; dies wird insbesondere im medizinischen Bereich und in der morphologischen Bildverarbeitung gelegentlich gefordert.
6) Der gewählte Bildausschnitt kann mit einem normalen Fernsehmonitor in voller zeitlicher Auflösung überwacht und somit vor eigentlichen Aufnahmen problemlos eingestellt werden, da die Teilbilder die gleiche Größe wie das Gesamtbild haben.
7) Da die elektrische Bandbreite der Teilbilder am Sensorausgang der eines Fernsehbildes entspricht, können die Teilbilder mit handelsüblichen analogen Videorekordern zunächst zwischengespeichert und erst später rechnerisch zum hochaufgelösten Gesamtbild zusammengefügt werden, was den Einsatz in einer tragbaren elektronischen Farbkamera mit nahezu der Auflösung eines Kleinbilddias und einer Speicherkapazität von über tausend Einzelbildern ermöglicht. Aussetzer (Drop-Outs) des Magnetbandes sind wegen der Bildverschachtelung leicht rechnerisch zu detektieren und ohne stark sichtbare Verluste zu korrigieren (Prinzip der Datenverschachtelung bzw. Verstreuung).
8) Aufgrund der kurzen mechanischen Wege sind keine gleitenden Führungen erforderlich, sondern lediglich Biegeführungen. Aus dem gleichen Grunde können spielfreie piezoelektrische Stellglieder eingesetzt werden, die direkt elektrisch ansteuerbar und mechanisch sehr stabil sind.
9) Da die Farbmaske direkt auf dem Sensor aufgebracht sein kann, muß der sogenannte Farbmultiplex nicht wie bei Schwarz-Weiß Sensoren durch in den Strahlengang nacheinander eingebrachte Farbfilter von der Größe des Bildfeldes oder durch Farbauftrennung auf drei Sensoren mit Prismen erzeugt werden, sondern erfolgt lediglich durch seitliche Verschiebung des Sensors. Es entfallen daher chromatische Aberrationen oder sonstige Bildbeeinträchtigungen durch Filter, so daß Aberrationen nur noch durch das Objektiv hervorgerufen werden.
10) Durch Verwendung eines in Massen produzierbaren niedrigauflösenden CCD-Flächensensors werden Kosten eingespart.

### Gewerbliche Anwendbarkeit

Die besonderen Einsatzmöglichkeiten ergeben sich durch vier Merkmale des neuen Bildwandlers:
1) Es kann eine hohe Auflösung von beispielsweise 2000 x 1650 Bildelementen und bei Verkleinerung der lichtempfindlichen Flächenelemente auch mehr für jeden der drei Farbkanäle erreicht werden.
2) Die Lichtempfindlichkeit ist gegenüber Kameras mit einer verschiebbaren Zeile, die eine vergleichbare Bildauflösung ermöglichen, um etwa zwei GrPßenordnungen größer;
3) Auch die Genauigkeit der Lage der Bildabtastpunkte ist gegenüber solchen Zeilenkameras um etwa zwei Größenordnungen höher;
4) Die Kosten für den erfindungsgemäßen Farbbildwandler sind durch Verwendung nur eines einzigen, für die Konsumelektronik in Massen gefertigten Farb-Sensors ohne aufwendige Optik oder teure Farbfilter sehr niedrig.

Insbesondere ergeben sich hierdurch folgende Anwendungsmöglichkeiten:

### Datenfernübertragung (S/W oder Farb-Telefax):

Die Datenaufnahme kann in kürzerer Zeit und mit verminderten Ansprüchen an die Stärke der Lichtquelle erfolgen. Die Vorlage braucht wegen der Verwendung eines Flächensensors nicht mehr verschoben zu werden. Daher kann eine extrem hohe geometrische Genauigkeit bei der Bildaufnahme garantiert werden.

### Filmabtastung zur digitalen Nachbearbeitung von Filmen:

Insbesondere bei der Colorierung, dem Ausgleich von Farbfehlern oder der Dateneingabe für "special effects" ist durch die oftmals große Anzahl aufzunehmender Bilder ist eine kurze Aufnahmezeit von besonderem Interesse. Flying Spot Scanner können zwar die erforderliche Auflösung erzielen, sind jedoch aufgrund der aufwenigen Technik mit drei Photomultiplierern sehr teuer (mehrere 100 TDM). Zeilenkameras haben eine geringere Empfindlichkeit und führen aufgrund großer mechanischer Verschiebungen zum Wackeln des Bildes durch geometrische Ungenauigkeiten.

### Hochauflösende Dateneingabe von Einzelbildern für die Werbegraphik:

Fast alle ganzseitigen Werbe-Farbphotos in Illustrierten werden vor dem Druck digital durch Kantenüberhöhung, Rauschunterdrückung, Erhöhung von Farbsättigung und Kontrast und durch Retusche verbessert.

### Hochauflösende Dateneingabe für Anwendungen in der Photogrammetrie:

Der Einsatz der digitalen Bildverarbeitung in der Photogrammetrie leidet insbesondere noch unter mangelnder Verfügbarkeit geometrisch hochgenauer und hochauflösender Abtastsysteme. Diese Lücke schließt dieser Bildwandler.

### Bildabtastung für die elektronische Archivierung (auch Dokumentenarchivierung):

Mit der verfügbaren Auflösung lassen sich Diapositive und -negative fast ohne Verluste archivieren. Dies ist für die Erstellung von Datenbanken, beispielsweise im medizinischen Bereich, von Bedeutung.

### Elektronischer Diapositiv/negativ-Betrachter:

Mit dem Farbbildwandler und einem hochauflösenden Monitor können Diapositive und mit digitaler Matrizierung auch Dianegative in hoher Qualität betrachtet werden. Dies gewinnt durch die abzusehende Einführung des HDTV-Standards für den Heimgebrauch an Bedeutung. Durch Verwendung zweier Speicher lassen sich Bildwechsel ohne Pause durchführen.

### Videometrie:

Für die Meßtechnik mit digitaler Bildverarbeitung ist die Verfügbarkeit eines hochpräzisen Abtastrasters, das sich definiert um Bruchteile des Sensorelementabstandes verschieben läßt von Wichtigkeit. Insbesondere gilt dies für die Moire-Meßtechnik mit Streifengittern, da dann die Bestimmung der Phase durch Bildpunktversatz um 120° direkt für jeden Bildpunkt getrennt erfolgen kann.

## Patentansprüche

1. Optoelektronischer Farbbildwandler mit einem Abbildungssystem, das ein Objekt auf einen zweidimensionalen CCD-Flächensensor abbildet, dessen Matrix aus lichtempfindlichen Sensor-Elementen zur Aufnahme eines Farbbildes eine Farbfiltermaske mit mindestens drei Farbauszügen aufweist,
dadurch **gekennzeichnet**, daß Mittel vorgesehen sind, die das Bild zwischen der Aufnahme der einzelnen Teilbilder relativ zum CCD-Flächensensor derart verschieben, daß nacheinander für jeden der mindestens drei Farbauszüge empfindliche Sensorelemente an denselben Bildort zu liegen kommen, und
daß eine Speicher- und Steuereinheit die mit verschobenem CCD-Flächensensor aufgenommenen Farbauszugs-Bilder dekkungsgleich zusammensetzt.

2. Farbbildwandler nach Anspruch 1,
dadurch **gekennzeichnet**, daß der CCD-Flächensensor verschiebbar angeordnet ist.

3. Farbbildwandler nach Anspruch 1 oder 2,
dadurch **gekennzeichnet**, daß der CCD-Flächensensor in der Bildebene zweidimensional verschiebbar ist.

4. Farbbildwandler nach einem der Ansprüche 1 bis 3,
dadurch **gekennzeichnet**, daß Piezostellglieder vorgesehen sind, die den Flächensensor verschieben.

5. Farbbildwandler nach einem der Ansprüche 1 bis 4,
dadurch **gekennzeichnet**, daß zur Erhöhung der Auflösung das Bild zwischen der Aufnahme der einzelnen Teilbilder relativ zum CCD-Flächensensor zusätzlich um Bruchteile des Sensor-Element-Abstandes verschoben wird.

6. Farbbildwandler nach Anspruch 5,
dadurch **gekennzeichnet**, daß durch die zusätzliche Verschiebung eine Angleichung der Bild-Auflösung in zueinander senkrechten Richtungen erfolgt.

7. Farbbildwandler nach einem der Ansprüche 1 bis 5,
dadurch **gekennzeichnet**, daß die Abtastung des Bildes durch geeignet verschobenen Teilbilder in einem hexagonalen Muster erfolgt.

## Revendications

1. Capteur opto-electronique d'images en couleurs, comprenant un système de reproduction à faire l'image d'un objet sur un détecteur C.C.D. plat bidimensionnel à une matrice formée par des éléments détecteurs photosensibles, qui comprend une cache filtre chromatique à au moins trois extraits de couleur pour la prise d'images en couleurs,
**caractérisé** en ce que des moyens sont prévus qui décalent l'image entre la prise des trames individuelles, relativement audit détecteur C.C.D. plat, de façon que pour chacun desdits au moins trois extraits de couleur des éléments détecteurs sensibles sont portes à la même position de l'image, l'un après l'autre, et
en ce qu'un organe mémoire et de commande compose, à convergence, les images d'extrait de couleur qui sont prises moyennant ledit détecteur C.C.D. plat.

2. Capteur d'images en couleurs selon la revendication 1,
**caractérisé** en ce que ledit détecteur C.C.D. plat est disposé à être décalé.

3. Capteur d'images en couleurs selon la revendicaton 1 ou 2,
**caractérisé** en ce que ledit détecteur C.C.D. plat est disposé à être décalé de façon bidimensionnelle dans le plan focal.

4. Capteur d'images en couleurs selon une quelconque des revendications 1 à 3,
**caractérisé** en ce que des organes finaux piézoélectriques sont prévus pour le décalage dudit détecteur plat.

5. Capteur d'images en couleurs selon une quelconque des vendications 1 à 3,
**caractérisé** en ce que l'image subit un décalage supplémentaire par des fractions de l'écart entre les éléments détecteurs, relativement audit détecteur C.C.D. plat, entre les prises des trames individuelles, afin d'augmenter la définition.

6. Capteur d'images en couleurs selon la revendicaton 5,
**caractérisé** en ce que ledit décalage supplémentaire donne lieu à un équilibrage de la défintion de l'image aux sens orthogonaux l'un sur l'autre.

7. Capteur d'images en couleurs selon une quelconque des revendications 1 à 5,
**caractérisé** en ce que l'analyse de l'image se fait moyennant des trames décalées de façon appropriée, dans une structure hexagonale.

## Claims

1. Opto-electronic colour-image sensor comprising a projection system which projects the image of an object on a bidimensional CCD junction detector whose matrix is formed by photosensitive detector elements and which comprises a colourfilter mask with at least three colour separations for taking colour pictures,
**characterized** in that means are provided for shifting the image be tween the individual frame pickups relative to said CCD junction detector, such that at least three colour separations of sensitive detector elements are positioned in succession at the same picture position, and
that a memory and control unit recombines, with convergence, the colour separation images which are taken by means of said CCD junction detector.

2. Colour-image sensor according to Claim 1,
**charactezized** in that said CCD junction detector is disposed for being shifted.

3. Colour-image sensor according to Claim 1 or 2,
**characterized** in that said CCD junction detector is disposed for bidimensional shifing in the focal plane.

4. Colour-image sensor according to any of Claims 1 to 3,
**characterized** in that piezo accuators are provided for shifting said junction detector.

5. Colour-image sensor according to any of Claims 1 to 3,
**characterized** in that the image is additionally shifted by fractions of the distance between the detetor elements, relative to said CCD junction detector, between the pick-up of said individual frames, so as to increase the resolution.

6. Colour-image sensor according to Claim 5,
**characterized** in that said additional shift gives rise to an adjustment of the image resolution in directions orthogonal with respect to each other.

7. Colour-image sensor according to any of Claims 1 to 5,
**characterized** in that the image is scanned by suitably shifted frames within a hexagonal pattern.
